# EUROPÄISCHE PATENTSCHRIFT

(11) **EP 2 336 001 B1**
(45) Veröffentlichungstag und Bekanntmachung des Hinweises auf die Patenterteilung: **05.11.2014**
(21) Anmeldenummer: 10189782.5
(22) Anmeldetag: 06.12.2010
(51) Int. Cl.: B62D 5/04, B62D 15/02, B62D 6/00

(54) **Verfahren und Vorrichtung zur Kompensation von Störinformationen in einem elektrischen Lenksystem**
Method and device for compensating for fault messages in an electrical steering system
Procédé et dispositif de compensation d'informations parasites dans un système de direction électrique

(30) Priorität: 07.12.2009 DE 102009047586
(43) Veröffentlichungstag der Anmeldung: 22.06.2011
(73) Patentinhaber: ZF Lenksysteme GmbH, 73527 Schwäbisch Gmünd (DE)
(72) Erfinder: Grüner, Stefan, 71549, Auenwald (DE); Nierobisch, Thomas, 73575, Leinzell (DE)

(56) Entgegenhaltungen:
- EP-A1- 2 028 080
- DE-A1- 19 919 374
- JP-A- 3 182 881

## Beschreibung

Die Erfindung betrifft ein Verfahren und eine Vorrichtung zur Kompensation von Störinformationen in einem elektrischen Lenksystem in einem Fahrzeug wie bekannt aus JP 03182881, wobei das Lenksystem einen ansteuerbaren Momentensteller, beispielsweise einen Elektromotor, umfasst und wobei der Momentensteller einen Rotor aufweist.

Während des Betriebs eines Fahrzeugs werden dem Fahrer über das Lenksystem Informationen übermittelt. Der Fahrer nimmt diese Informationen am Lenkrad wahr, wobei diese Informationen sowohl Nutzinformationen als auch Störinformationen umfassen. Nutzinformationen werden beispielsweise in Form von Lenkmomenten übermittelt, die eine Rückmeldung über den Fahrbahnreibwert, beziehungsweise einen aktuellen Kontakt zwischen Reifen und Fahrbahnoberfläche, liefern. Weitere Nutzinformationen betreffen beispielsweise Fahrbahnunebenheiten, die vom Fahrer über das Lenksystem am Lenkrad wahrgenommen werden. Derartige Nutzinformationen benötigt der Fahrer, um das Fahrzeug sicher zu steuern.

Insbesondere auf Niedrigreibwert treten häufig Achsschwingungen bzw. Rattern sowohl beim Parkieren als auch beim Fahren auf, da die Reifen keine dämpfende Wirkung durch den Untergrund mehr erfahren. Rattern kann aber auch durch die Beschaffenheit der Fahrbahnoberfläche bzw. durch deren geschwindigkeitsabhängige Anregungsfrequenz in Kombination mit der Achseigenfrequenz bzw. mit Überhöhungen dessen Amplitudengangs verursacht werden. Diesbezügliche Rückmeldungen durch das Lenksystem sowie Rückmeldungen, die durch interne Fahrzeugstörungen bedingt sind, lenken jedoch regelmäßig den Fahrer während des Betriebs des Fahrzeugs ab beziehungsweise irritieren den Fahrer und erschweren damit ein sicheres Steuern des Fahrzeugs. Fahrzeuginterne Störungen können durch unausgewuchtete Räder (sogenanntes "Smooth Read Shake" oder "Shimmy"), unausgewuchtete oder in der Dicke variierende Bremsscheiben (sogenanntes "Brake Judder") und/oder durch im Gesamtverbund angeregte Resonanzen verursacht werden.

Im Folgenden werden Informationen, deren Rückmeldung durch das Lenksystem die sichere Fahrzeugführung beeinträchtigen, als Störinformation bezeichnet,. Störinformationen lassen sich unterteilen in sinusförmige Störinformationen mit variabler Frequenz sowie unstrukturierte Störanregungen. Shimmy und Brake Judder beispielsweise sind sinusförmige Störinformationen, die durch die Radumlaufdrehzahl der Räder angeregt werden.

Aufgabe der Erfindung ist es, ein Verfahren und eine Vorrichtung bereitzustellen, die eine Reduzierung von an dem Lenkrad wahrnehmbaren Störinformationen ermöglichen, so dass eine Beeinträchtigung des Fahrers durch auf Störinformationen basierende Rückmeldungen reduziert wird. Insbesondere soll mit dem erfindungsgemäßen Verfahren und der Vorrichtung jede Art von Störinformationen reduziert beziehungsweise kompensiert werden können.

Die Aufgabe wird durch ein Verfahren mit den Merkmalen des unabhängigen Patentanspruchs 1 gelöst. Weitere Vorteile werden durch die in den Unteransprüchen genannten Ausführungsformen erreicht, wobei unterschiedliche Kombinationen dieser Merkmale - auch wenn dies nicht ausdrücklich erwähnt ist - möglich sind. Die Aufgabe wird ferner durch eine Vorrichtung gemäß dem unabhängigen Patentanspruch 14 gelöst.

Erfindungsgemäß wird ein Rotorsignal erfasst, wobei das Rotorsignal vorzugsweise eine aktuelle Rotorlage oder eine aktuelle Rotorgeschwindigkeit beschreibt. Hierzu kann beispielsweise ein in dem Fahrzeug bereits vorhandener Rotorlagesensor verwendet werden. Aus dem erfassten Rotorsignal wird beispielsweise mittels eines Filters ein Störsignal extrahiert. Das extrahierte Störsignal wird einem kombinierten Stör- und Zustandsberechner zugeführt, welcher in Abhängigkeit von dem Störsignal ein Kompensationsmoment erzeugt. Das Kompensationsmoment wird dann herangezogen, um das elektrische Lenksystem und dort insbesondere den sogenannten EPS-Motor anzusteuern, so dass aufgrund der Amplitude und/oder der Phasenlage der Kompensationssignale die Störinformationen reduziert oder sogar vollständig neutralisiert werden. Ein kombinierter Stör- und Zustandsberechner, der für das erfindungsgemäße Regelungsverfahren zur Kompensation von Störinformationen eingesetzt werden kann, ist beispielsweise aus S.Kwon, W. K. Chung, " Perturbation Compensator based Robust Tracking Control and State Estimation of Mechanical Systems", Springer Verlag, 2004, bekannt.

Bei einer Anwendung des erfindungsgemäßen Verfahrens bzw. der erfindungsgemäßen Vorrichtung werden die aus dem Rotorsignal extrahierten Störinformationen durch das Kompensationssignal reduziert. Dies hat aber zur Folge, dass dem kombinierten Stör- und Zustandsberechner keine oder nur noch wenige Störinformationen zugeführt werden können. Deshalb ist es möglich, dass der kombinierte Stör- und Zustandsberechner das Kompensationsmoment nicht mehr zuverlässig bestimmen kann, da der kombinierte Stör- und Zustandsberechner bei der Ausführung des erfindungsgemäßen Verfahrens nicht mehr die tatsächlich im System vorhandenen Störinformationen erhält, sondern die Störinformationen durch das Kompensationsmoment verändert und insbesondere reduziert werden. In einer besonders bevorzugten Ausführungsform ist deshalb eine modelbasierte Rückführung vorgesehen. Hierbei wird das erzeugte Kompensationsmoment einem Referenzmodel zugeführt und es wird mittels des Referenzmodels das Störsignal rekonstruiert. Dies gewährleistet, dass die Störinformationen stets optimal reduziert werden. Bei der bevorzugten Ausführungsform wird folglich die ursprüngliche Störinformation mittels des Referenzmodels rekonstruiert, so dass diese dem kombinierten Stör- und Zustandsberechner erneut zur Verfügung gestellt werden kann. Damit ist ein besonders zuverlässiges und wirkungsvolles Verfahren zur Bestimmung des Kompensationsmoments möglich. Das Referenzmodel entspricht beispielsweise einer physikalischen Modellierung der gesamten Regelstrecke.

Gemäß einer weiteren bevorzugten Ausführungsform ist die modelbasierte Rückführung zu- beziehungsweise abschaltbar. Insbesondere kann vorgesehen sein, dass die modelbasierte Rückführung dann zugeschaltet wird, wenn das anliegende Störsignal und das rekonstruierte Störsignal bezüglich ihrer Phasenlage und/oder Amplitude in hinreichender Übereinstimmung sind. Damit wird verhindert, dass durch ein möglicherweise ungenau rekonstruiertes Störsignal die Kompensationsmomente unzutreffend berechnet werden, was möglicherweise zur Erzeugung von weiteren Störinformationen führen könnte. Hierbei ist es von besonderem Vorteil, wenn eine Adaption des Referenzmodels durchgeführt wird, um schließlich eine hinreichende Übereinstimmung des tatsächlich anliegenden Störsignals und des rekonstruierten Störsignals zu erreichen. Vorzugsweise wird während des Betriebs des Fahrzeugs ein Moment aufgeschaltet, um eine Wirkungskette zu ermitteln und insbesondere die Auswirkungen des aufgeschalteten Moments konkret zu erfassen. Die Adaptation des Referenzmodells kann dann in Abhängigkeit von der so ermittelten Wirkungskette durchgeführt werden. Damit wird die Genauigkeit und Zuverlässigkeit des Kompensationsverfahrens nochmals erhöht. Vorzugsweise wird bei der Aufschaltung des Moments ein Moment derart gewählt, dass es von dem Fahrer nicht störend beim Betrieb des Fahrzeugs empfunden wird.

Gemäß einer vorteilhaften Ausführungsform umfasst das Referenzmodell eine Modellstruktur eines Elektromotors, die initial als träge Masse mit einer unbekannten, zu der Geschwindigkeit des Elektromotors proportionalen Dämpfung angenommen wird. Damit ist es möglich, im Verlaufe der Adaptation mittels eines Parameters die Dämpfung vorzugeben, so dass durch die Beeinflussung dieses einen Parameters besonders einfach eine wirkungsvolle Adaptation des Referenzmodells erreicht werden kann. Selbstverständlich können daneben weitere Parameter während der Adaptation verändert werden. Vorzugsweise wird die Dämpfung mittels eines Kalmanfilters innerhalb eines vorgegebenen Wertbereichs bestimmt. Das Filter, mittels dessen aus dem Rotorsignal das Störsignal extrahiert wird, kann beispielsweise als Hochpass oder als Bandpass ausgebildet sein. Vorzugsweise ist das Filter als ein variabler Bandpass ausgebildet. Hierbei wird in Abhängigkeit von einer Fahrzeuggeschwindigkeit und/oder in Abhängigkeit von einer mit einer Raddrehzahl korrelierenden Größe eine Anregungsfrequenz gebildet. Es werden dann eine Mittenfrequenz und/oder die Eckfrequenzen des variablen Bandpasses in Abhängigkeit von der Anregungsfrequenz gewählt.

Das erfindungsgemäße Verfahren beziehungsweise die erfindungsgemäße Vorrichtung zeichnen sich insbesondere dadurch aus, dass eine Mehrzahl von Filtern eingesetzt werden können, mittels derer aus dem Rotorsignal eine Mehrzahl unterschiedlicher Störsignale ermittelt werden können. Die so ermittelten Störsignale können dann gemeinsam dem kombinierten Stör- und Zustandsberechner zugeführt werden. Aus den beispielsweise überlagerten Störsignalen erzeugt der kombinierte Stör- und Zustandsberechner dann ein einziges Kompensationssignal. Alternativ oder ergänzend hierzu kann vorgesehen sein, das Störsignal mittels einer spezifizierten Übertragungsfunktion zu extrahieren, wobei die Übertragungsfunktion die gewünschte Störunterdrückung über alle möglichen Frequenzen beinhaltet.

Erfindungsgemäß kann folglich jede Art von Störinformation kompensiert werden, unabhängig davon, ob die Störinformation eine sinusförmige Störung mit variabler Frequenz und/oder eine unstrukturierte Störung umfasst. Außerdem wird erreicht, dass mit ein und demselben System eine Mehrzahl unterschiedlicher Störinformationen kompensiert werden können.

Weitere Merkmale und Vorteile der Erfindung sind in den Figuren und der folgenden Beschreibung dargestellt. Hierbei können die einzelnen Merkmale unterschiedlicher Ausführungsformen kombiniert werden, sofern dies nicht offensichtlich widersprüchlich ist. In den Figuren zeigen:
Figur 1 eine schematische Darstellung eines Lenksystems in einem Fahrzeug,
Figur 2 eine schematische Darstellung einer ersten Ausführungsform der Erfindung,
Figur 3 eine skizzierte Darstellung eines möglichen grundlegenden Aufbaues eines kombinierten Stör- und Zustandsberechners,
Figur 4 eine weitere Ausführungsform der Erfindung mit Rückführung des Kompensationsmoments,
Figur 5 eine Ausführungsform der Erfindung mit zu- und abschaltbarer Rückführung des Kompensationsmoments,
Figur 6 eine Ausführungsform der Erfindung, mit einem als frequenzvariablen Bandpass ausgebildeten Filter,
Figur 7 eine weitere Ausführungsform der Erfindung mit einer Mehrzahl von Filtern zur Extraktion unterschiedliche Störsignale.

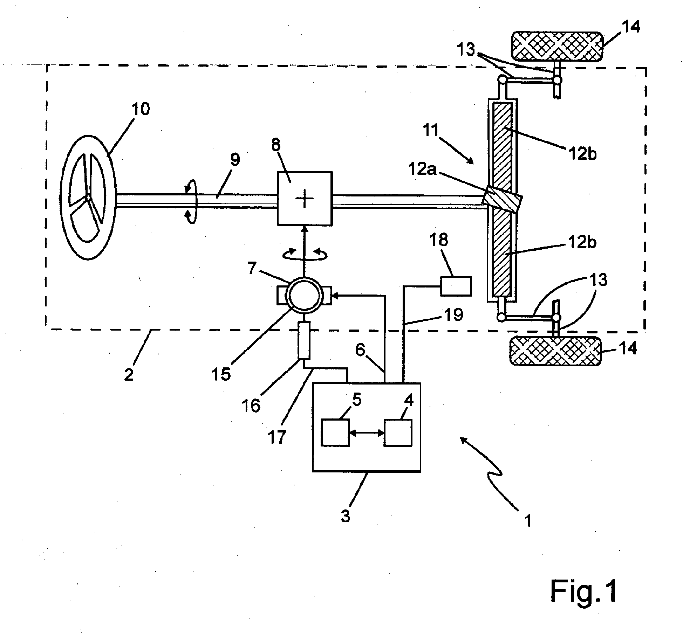

In Figur 1 ist ein elektrisches Lenksystem 1 dargestellt, dass eine Lenkvorrichtung 2 und ein Steuergerät 3 umfasst. In dem Steuergerät 3 ist ein Mikroprozessor 4 angeordnet, der über eine Datenleitung, beispielsweise ein Bussystem, mit einem Speicherelement 5 verbunden ist. In dem Speicherelement 5 sind Speicherbereiche ausgebildet, in denen Funktionsmittel zur Durchführung des erfindungsgemäßen Verfahrens, beispielsweise in Form eines Computerprogramms, abgespeichert sind. In dem Speicherelement 5 können ferner Kernfelder und vorgegebene Parameter oder sonstige Werte abgelegt sein.

Über eine Signalleitung 6 ist das Steuergerät 3 mit einem Momentensteller 7 verbunden, der beispielsweise als Elektromotor ausgebildet ist, so dass eine Steuerung des Elektromotors beziehungsweise des Momentenstellers 7 durch das Steuergerät 3 ermöglicht wird. Der Elektromotor wirkt über ein Getriebe 8 auf einen Drehstab 9. An dem Drehstab 9 ist ein Lenkmittel, beispielsweise ein Lenkrad 10, angeordnet.

Der Momentensteller 7 weist einen Rotor 15 auf. Mittels eines Rotorlagesensors 16 ist die aktuelle Rotorlage erfassbar. Alternativ hierzu könnte mittels eines geeigneten Sensors die aktuelle Rotorgeschwindigkeit erfasst werden. Über eine Datenleitung 17 wird dem Steuergerät 3 das die Rotorlage oder die Rotorgeschwindigkeit beschreibende Rotorsignal zugeführt.

Die Lenkvorrichtung weist ferner ein Lenkgetriebe 11 auf, das als Zahnstangelenkgetriebe ausgebildet ist. Das Lenkgetriebe 11 ist über ein Ritzel 12a und eine Zahnstange 12b auf jeder Fahrzeugseite mit einem Lenkgestänge 13, das jeweils mit einem Rad zusammenwirkt, verbunden. Mittels eines Drehzahlsensors 18 kann eine Raddrehzahl erfasst und über eine Datenleitung 19 an das Steuergerät 3 übermittelt werden. Die Datenleitungen 6, 17 und/oder 19 können in vielfältiger Weise ausgeführt seien. Vorzugsweise wird ein Bussystem zur Kommunikation zwischen dem Steuergerät 3 und den Sensoren beziehungsweise Aktuatoren eingesetzt.

Durch eine geeignete Programmierung des Steuergeräts 3 ist auf dem in Figur 1 dargestellten Lenksystem 1 das erfindungsgemäße Verfahren in unterschiedlichen Ausführungsformen durchführbar.

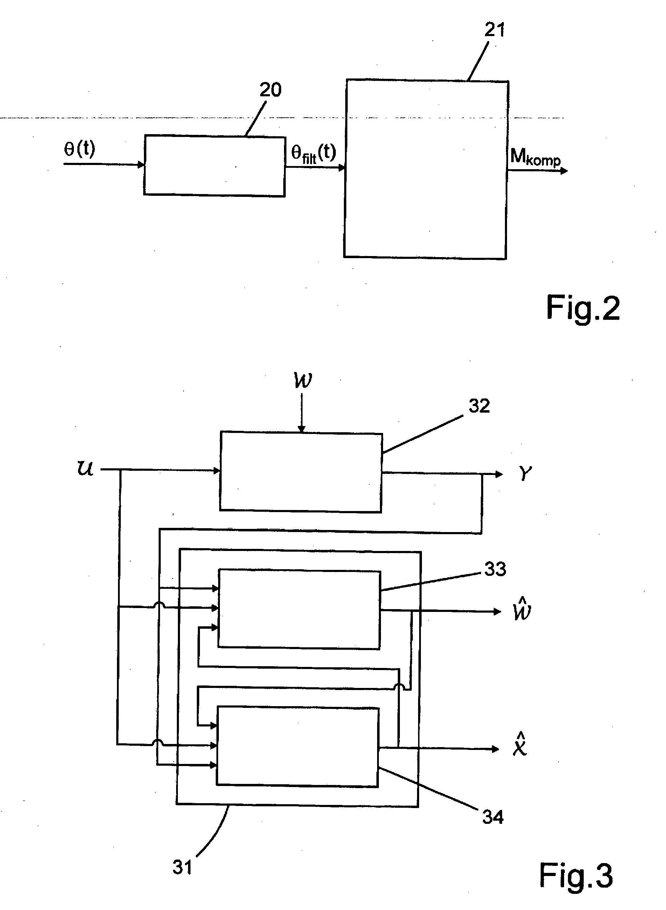

In Figur 2 ist eine erste Ausführungsform der Erfindung gezeigt. In dieser Ausführungsform wird das beispielsweise mittels des Rotorlagesensors 16 erfasste Rotorsignal θ(t) einem Filter 20 zugeführt. Der Filter ist in dieser Ausführungsform zur Extraktion bestimmter Störsignale θ_{filt}(t) ausgebildet. Das Störsignal θ_{filt}(t) wird einem kombinierten Stör- und Zustandsberechner 21 zugeführt. Das Filter ist beispielsweise als Hoch- oder Bandpass ausgeführt und ermöglicht das Herausfiltern von Signalteilen, die durch interne Fahrzeugstörungen hervorgerufen werden. Zur Erzeugung des Kompensationsmoments M_{Komp} wird erfindungsgemäß der kombinierte Stör- und Zustandsberechner 21 verwendet.

In Figur 3 ist eine Prinzipdarstellung eines kombinierten Stör- und Zustandsberechners 31 gezeigt. Mittels des kombinierten Stör- und Zustandsberechners 31 kann anhand einer bekannten Stellgröße u und einer Ausgangsgröße y, die am Ausgang einer Regelstrecke 32 gemessen wird, eine interne Zustandsgröße *X̂* und eine Störgröße *Ŵ* berechnet werden. Bei dem kombinierten Stör- und Zustandsberechner 31 ist die Regelstrecke 32 als Modell abstrahiert und implizit vorhanden. Die Störgröße *Ŵ* wird mittels eines Störgrößenberechners 33 und die internen Zustandsgrößen *X̂* werden mittels eines Zustandsberechners 34 ermittelt. Wie in der Prinzipdarstellung in Figur 3 gezeigt, wird der Ausgang des Störgrößenberechners 33 dem Zustandsberechner 34 und der Ausgang des Zustandsberechners 34 dem Störgrößenberechner 33 zugeführt.

Die Dynamik eines kombinierten Stör- und Zustandsberechners 31 kann durch geeignete Eigenwertvorgabe in Abhängigkeit von einer Genauigkeit des Modells der Regelstrecke 32 sowie in Abhängigkeit von einem Messrauschen parametrisiert werden.

Die Anwendung eines kombinierten Stör- und Zustandsberechners 21, 31 eignet sich besonders zur Kompensation von Störinformationen in einem Lenksystem, da die Anregung der Störinformationen prinzipiell unbekannt ist und somit als unbekannte Störgröße interpretiert werden kann, die berechnet und wie in Figur 2 dargestellt komplementär in Form eines Kompensationsmoments M_{Komp} aufgeschaltet werden kann.

Das erfindungsgemäße Verfahren weist einen besonders geringen Rechneraufwand auf, da ein einfaches Ersatzmodel der Wirkungskette von Motormoment auf die Rotorlage anhand des Nominalmodells einer Trägenmasse des Momentenstellers 7, also beispielsweise des EPS-Motors verwendet wird. Als Rotorsignal θ(t) kann sowohl die Rotorlage als auch eine Rotorgeschwindigkeit, die entweder aus der Rotorlage abgeleitet oder aber gemessen wird, verwendet werden. Somit reicht die in den Fahrzeugen meist vorhandene Sensorik zur Durchführung des erfindungsgemäßen Verfahrens aus. Störinformationen müssen geeignet aus dem Rotorsignal extrahiert werden. Hierfür wird das Filter 20 eingesetzt, das die Extraktion gewisser Frequenzanteile aus dem Rotorsignal ermöglicht. Die heraus gefilterten Störinformationen θ_{filt}(t) werden nicht durch die Servounterstützung beziehungsweise das Unterstützungsmoment des Elektromotors hervorgerufen.

Daher wird das verursachende Moment als die unbekannte aber zu kompensierende Störgröße angenommen. Da die Störinformationen durch die internen Fahrzeugstörungen und nicht durch das angeforderte Motormoment angeregt werden, kann mittels des kombinierten Stör- und Zustandsberechners 21 ein entsprechendes Kompensationsmoment M_{Komp} erzeugt werden.

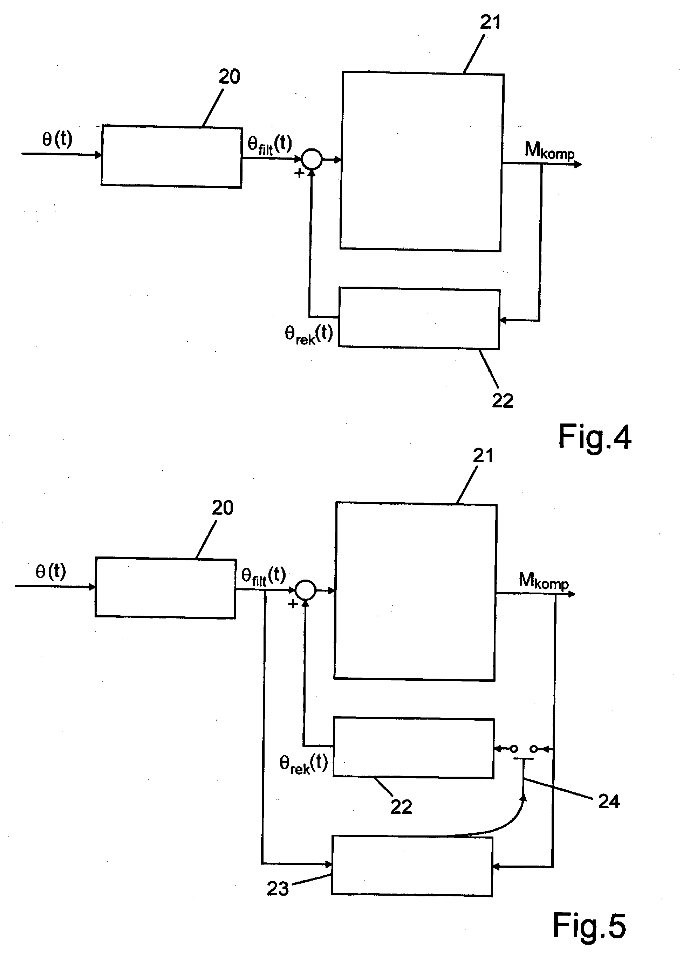

Bei Anwendung des erfindungsgemäßen Verfahrens wird durch Beaufschlagung des Elektromotors bzw. des Momentenstellers 7 mittels des Kompensationsmoments M_{Komp} das Störsignal beziehungsweise Anteile des Störsignals durch das anliegende Kompensationssignal verringert oder ausgelöscht. Dies bewirkt, dass diese Anteile des Störsignals nicht mehr in dem Rotorsignal und damit auch nicht mehr in dem gefilterten Störsignal enthalten sind und somit dem kombinierten Stör- und Zustandsberechner 21 nicht mehr zugeführt werden können. Dadurch kann meist keine vollständige Kompensation des Störsignals durchgeführt werden. In Figur 4 ist eine diesbezüglich verbesserte Ausführungsform des erfindungsgemäßen Verfahrens dargestellt, in der das ursprüngliche Störsignal rekonstruiert wird. Hierzu wird ein Referenzmodel 22 eingesetzt, dem das Kompensationsmoment M_{Komp} zugeführt wird. Das Referenzmodel 22 wird beispielsweise über eine physikalische Modellierung oder anhand einer beispielsweise während des Betriebs des Fahrzeugs beziehungsweise des Lenksystems durchgeführten Identifikation der Wirkungskette "Motormoment auf Rotorlage" beziehungsweise "Motormoment auf Rotorgeschwindigkeit" erzeugt. Mittels des Referenzmodells 22 wird folglich aus dem Kompensationsmoment M_{Komp} ein rekonstruiertes Störsignal θᵣₑₖ(t) erzeugt und ebenfalls dem kombinierten Störund Zustandsberechner 21 zugeführt. Vorzugsweise wird das aus dem Rotorlagesignal gefilterte Störsignal θ_{filt}(t) mit dem rekonstruierten Störsignal θ ᵣₑₖ(t) überlagert und als gemeinsames Signal dem kombinierten Stör- und Zustandsberechner 21 zugeführt.

Stimmt das Referenzmodel mit der realen Strecke vollständig überein, so kann die Störung mit dem in Figur 4 gezeigten Ausführungsbeispiel vollständig kompensiert werden. Das Referenzmodel 22 wird beispielsweise im Speicher 5 des Steuergeräts 3 abgelegt.

Die in Figur 5 dargestellte Ausführungsform der Erfindung ermöglicht eine nochmalige Verbesserung der Störkompensation. Bei dieser Ausführungsform ist ein Abschalten der modelbasierenden Rückführung vorgesehen, wobei innerhalb eines vorgebbaren relativ kurzen Zeitintervalls geprüft wird, ob das anliegende Störsignal θ_{filt}(t) und das rekonstruierte Störsignal θᵣₑₖ(t) bezüglich ihrer Amplitude und ihrer Phasenlage in ausreichend guter Übereinstimmung sind. Ist dies gegeben, so wird die modelbasierte Rückführung beispielsweise durch Aktivierung eines Schaltelements 24 aufgeschaltet. Diese Ausführungsform hat den Vorteil, dass bei einer zeitvarianten Regelstrecke oder einer Variation in der Wirkungskette möglicherweise bedingt durch Produktionstoleranzen und einem hieraus sich ergebenden schlechten beziehungsweise ungenügend übereinstimmenden Referenzmodel 22 die modelbasierte Rückführung deaktiviert werden kann. Dennoch kann eine Kompensation mittels des kombinierten Stör- und Zustandsberechners 21 aufrechterhalten werden. Damit ist dann zwar möglicherweise keine vollständige Kompensation der Störinformation mehr möglich, dennoch bleibt das Gesamtsystem über den gesamten Lebenszyklus des Fahrzeuges in einem fehlerfreien, wenn auch eingeschränkten Betriebsmodus.

Vorzugsweise wird zusätzlich zur Validierung, also der Bestimmung der Güte des Referenzmodels und dem davon abhängigem Erzeugen beziehungsweise Aufschalten des rekonstruierten Störsignals θᵣₑₖ(t) in dem Element 23 auch eine Adaptation des Streckenmodels vorgenommen, falls ein signifikanter Amplituden - beziehungsweise Phasenversatz vorliegt. Anhand des aktuell gestellten Motormoments sowie des gemessenen Rotorsignals wird das im Speicher abgelegte Referenzmodel 22 modifiziert, bis eine Übereinstimmung zwischen dem Störsignal und dem rekonstruierten Störsignal erreicht wird. Dann wird die modelbasierte Rückkopplung aufgeschaltet. Die Identifikation der Wirkungskette selbst kann beispielsweise durch eine lineare Regression anhand temporär gespeicherter Eingangs- und Ausgangsdaten erfolgen. Eine aufwendige Speicherung einer Zeitreihe von Messwerten in dem Steuergerät ist technisch jedoch meist schwierig zu realisieren. Das verwendete Adaptationsverfahren beruht daher vorzugsweise auf den Messungen des aktuellen Abtastschrittes. Die Modellstruktur eines Elektromotors für die Rückkupplung wird zunächst als träge Masse mit einer unbekannten geschwindigkeitsproportionalen Dämpfung angenommen. Der Parameter der Dämpfung wird mittels eines Kalmanfilters in einem vorgegebenen Wertebereich identifiziert.

Zur Identifikation der Wirkungskette kann vorgesehen sein, während des Betriebs des Fahrzeugs ein Moment gezielt aufzuschalten. Hierbei muss das Moment jedoch so ausgestaltet sein, dass es von dem Fahrer am Lenkrad nicht wahrgenommen wird.

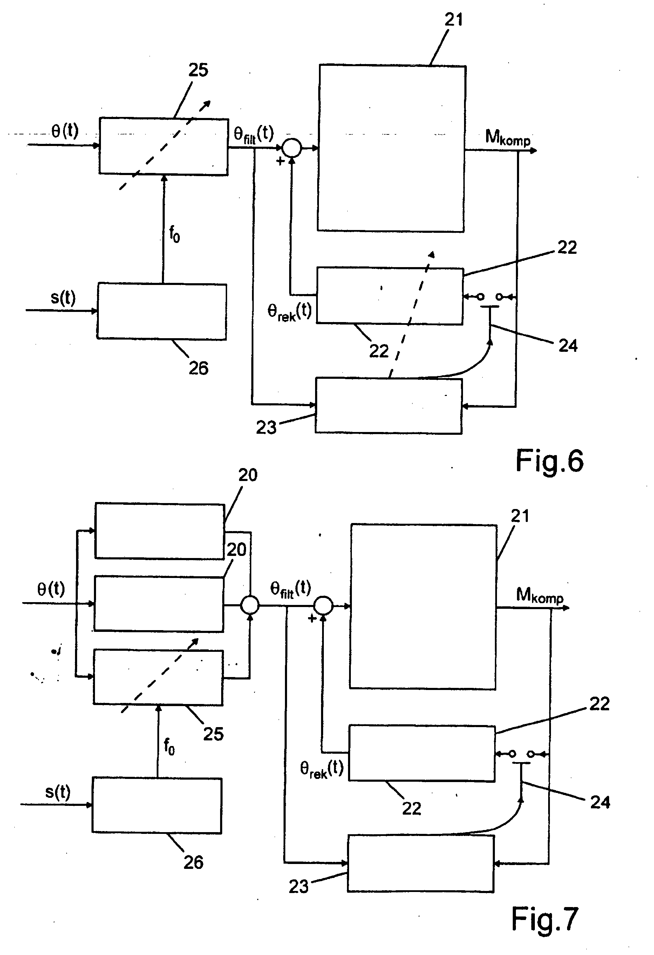

Statt des festeingestellten Filters 20 kann - wie in der Ausführungsform in Figur 6 gezeigt - ein frequenzvariabler Bandpass 25 eingesetzt werden. Die Mittenfrequenzen beziehungsweise Eckfrequenzen des frequenzvariablen Bandpasses 25 werden mittels eines externen Signals s(t) eingestellt, wobei das Signal s(t) beispielsweise einer Radgeschwindigkeit oder einer Radumlauffrequenz entspricht, die mittels des Sensors 18 ermittelt wurde. In einem Modul 26 wird eine Anregungsfrequenz bestimmt, die beispielsweise durch Unwuchten der Räder oder der Bremsscheiben verursacht als Lenkraddrehschwingungen von dem Fahrer bemerkt werden können. Das in Figur 6 gezeigte Ausführungsbeispiel ermöglicht damit insbesondere eine Kombination derartiger Lenkraddrehschwingungen, wobei es das Signal s(t) ermöglicht, den frequenzvariablen Bandpass 25 mittels der Anregungsfrequenz f₀ für die Lenkraddrehschwingungen zu zentrieren und so selektiv nur den Anteil der Störungen zu kompensieren, den der Fahrer als Lenkraddrehschwingungen wahrnehmen würde.

Das erfindungsgemäße Verfahren beziehungsweise die erfindungsgemäße Vorrichtung ermöglichen es in besonders einfacher Weise, verschiedene Anteile von internen Fahrzeugstörungen gezielt zu kompensieren. Hierzu ist keine mehrfache Auslegung beziehungsweise Implementierung des kombinierten Störund Zustandsberechners notwendig. Es genügt vielmehr, eine spezifizierte

Übertragungsfunktion anzugeben, die die gewünschte Störunterdrückung über alle Frequenzen beinhaltet. Wie in dem Ausführungsbeispiel in Figur 7 gezeigt, kann auch eine Mehrzahl von Filtern 20, 25 vorgesehen sein, wobei jedes Filter für einen bestimmten Störanteil vorgesehen ist. Die Filter können mit einem oder mehreren frequenzvariablen Bandpässen 25 kombiniert werden. So können beispielsweise mit den Filtern 20 verschiedene Resonanzbänder und zusätzlich kann mit einem oder mehreren frequenzvariablen Bandpässen 25 Lenkraddrehschwenkungen gedämpft beziehungsweise kompensiert werden.

## Patentansprüche

1. Verfahren zur Kompensation von Störinformationen in einem elektrischen Lenksystem (1) in einem Fahrzeug, wobei das Lenksystem (1) einen ansteuerbaren Momentensteller (7) umfasst und wobei der Momentensteller (7) einen Rotor (15) aufweist, **dadurch gekennzeichnet, dass** ein eine aktuelle Rotorlage oder eine aktuelle Rotorgeschwindigkeit beschreibendes Rotorsignal (θ(t)) erfasst wird, aus dem erfassten Rotorsignal (θ(t)) ein Störsignal (θ_{filt}(t)) extrahiert wird, das Störsignal (θ_{filt}(t)) einem kombinierten Stör- und Zustandsberechner (21) zugeführt wird und mittels des kombinierten Stör- und Zustandsberechners (21) in Abhängigkeit von dem Störsignal (θ_{filt}(t)) ein Kompensationsmoment (M_{Komp}) erzeugt wird.

2. Verfahren nach Anspruch 1, **dadurch gekennzeichnet, dass** das Störsignal (θ_{filt}(t)) mittels eines Filters (20) aus dem Rotorsignal (θ(t)) extrahiert wird, wobei das Filter (20) insbesondere als Hochpass oder Bandpass ausgebildet ist.

3. Verfahren nach einem der vorangehenden Ansprüche, **dadurch gekennzeichnet, dass** eine modellbasierte Rückführung derart vorgesehen ist, dass das Kompensationsmoment (M_{Komp}) einem Referenzmodell (22) zugeführt wird und mittels des Referenzmodells (22) ein dem Störsignal (θ_{filt}(t)) entsprechendes rekonstruiertes Störsignal (θᵣₑₖ(t)) gebildet wird.

4. Verfahren nach Anspruch 3, **dadurch gekennzeichnet, dass** das Referenzmodell (22) einer physikalischen Modellierung der Regelstrecke entspricht.

5. Verfahren nach einem der Ansprüche 3 oder 4, **dadurch gekennzeichnet, dass** die modellbasierte Rückführung zu- und abschaltbar ist.

6. Verfahren nach Anspruch 5, **dadurch gekennzeichnet, dass** in einem bestimmbaren Zeitintervall geprüft wird, ob das anliegende Störsignal (θ_{filt}(t)) und das rekonstruierte Störsignal (8_{filt_rek}(t)) bezüglich deren Phasenlage und/oder Amplitude in hinreichender Übereinstimmung sind und wenn dies der Fall ist, die modellbasierte Rückführung zugeschaltet wird.

7. Verfahren nach einem der Ansprüche 3 bis 6, **dadurch gekennzeichnet, dass** geprüft wird, ob das anliegende Störsignal (θ_{filt}(t)) und das rekonstruierte Störsignal (θᵣₑₖ(t)) bezüglich deren Phasenlage und/oder Amplitude in hinreichender Übereinstimmung sind und wenn dies nicht der Fall ist, eine Adaption des Referenzmodells (28) durchgeführt wird, bis eine hinreichende Übereinstimmung des anliegenden Störsignals (θ_{filt}(t)) und des rekonstruierten Störsignals (θᵣₑₖ(t)) erreicht wird.

8. Verfahren nach Anspruch 7, **dadurch gekennzeichnet, dass** durch Aufschaltung eines Moments während des Betriebs des Fahrzeugs eine Wirkungskette ermittelt wird und die Adaption in Abhängigkeit von der ermittelten Wirkungskette durchgeführt wird.

9. Verfahren nach einem der Ansprüche 3 bis 8, **dadurch gekennzeichnet, dass** das Referenzmodell (22) eine Modellstruktur eines Momentenstellers (7) umfasst, wobei die Modellstruktur des Momentenstellers (7) initial als träge Masse mit einer unbekannten Dämpfung angenommen wird, wobei die Dämpfung zu der Geschwindigkeit des Momentenstellers (7) proportional ist.

10. Verfahren nach Anspruch 9, **dadurch gekennzeichnet, dass** die Dämpfung mittels einer online-Parameterschätzung, insbesondere eines Kalmanfilters, innerhalb eines vorgegebenen Wertebereichs bestimmt wird.

11. Verfahren nach einem der vorangehenden Ansprüche, **dadurch gekennzeichnet, dass** als Filter ein variabler Bandpass (25) verwendet wird, wobei in Abhängigkeit von einer Fahrzeuggeschwindigkeit (v(t)) und/oder in Abhängigkeit von einer mit einer Raddrehzahl korrelierenden Größe eine Anregungsfrequenz (f₀) gebildet wird und wobei mindestens eine Mittenfrequenz oder die Eckfrequenzen des variablen Bandpasses (25) in Abhängigkeit von der Anregungsfrequenz (f₀) gewählt wird/werden.

12. Verfahren nach einem der vorangehenden Ansprüche, **dadurch gekennzeichnet, dass** die Extraktion des Störsignals (θ_{filt}(t)) mittels einer spezifizierten Übertragungsfunktion realisiert wird, wobei die Übertragungsfunktion die zu erreichende Störunterdrückung über alle Frequenzen umfasst.

13. Verfahren nach einem der vorangehenden Ansprüche, **dadurch gekennzeichnet, dass** eine Mehrzahl von Filtern (20, 25) eingesetzt wird, mittels derer aus dem Rotorsignal (θ(t)) unterschiedliche Störsignale (θ_{filt(t)}) ermittelt werden und die ermittelten Störsignale (θ_{filt}(t)) gemeinsam dem kombinierten Stör- und Zustandsberechner (21) zugeführt werden.

14. Vorrichtung zur Kompensation von Störinformationen in einem elektrischen Lenksystem (1), wobei das Lenksystem (1) einen ansteuerbaren Momentensteller (7) umfasst, der Momentensteller (7) einen Rotor (15) aufweist und das Lenksystem (1) einen Sensor (16) zur Erfassung eines eine aktuelle Rotorlage oder eine aktuelle Rotorgeschwindigkeit beschreibenden Rotorsignal (θ(t))umfasst, **dadurch gekennzeichnet, dass** die Vorrichtung ein Filterelement (20) zum Extrahieren eines Störsignals (θ_{filt}(t)) aus dem erfassten Rotorsignal (θ(t)) und einen kombinierten Stör- und Zustandsberechner (21) zur Erzeugung eines Kompensationsmoments (M_{Komp}) in Abhängigkeit von dem Störsignal (θ_{filt}(t)) umfasst.

15. Vorrichtung nach Anspruch 14, **dadurch gekennzeichnet, dass** die Vorrichtung Mittel zur Durchführung eines Verfahrens nach einem der Ansprüche 1 bis 13 aufweist.

## Claims

1. Method for compensating for fault information in an electrical steering system (1) in a vehicle, wherein the steering system (1) comprises an actuable torque adjuster (7), and wherein the torque adjuster (7) has a rotor (15), **characterized in that** a rotor signal (θ(t)) which describes a current rotor position or a current rotor speed is detected, a fault signal (θ_{filt}(t)) is extracted from the detected rotor signal (θ(t)), the fault signal (θ_{filt}(t)) is fed to a combined fault and state calculator (21), and a compensation torque (M_{Comp}) is generated by means of the combined fault and state calculator (21) as a function of the fault signal (θ_{filt}(t)).

2. Method according to Claim 1, **characterized in that** the fault signal (θ_{filt}(t)) is extracted from the rotor signal (θ(t)) by means of a filter (20), wherein the filter (20) is embodied, in particular, as a high-pass or bandpass filter.

3. Method according to one of the preceding claims, **characterized in that** a model-based feedback is provided in such a way that the compensation torque (M_{comp}) is fed to a reference model (22), and a reconstructed fault signal (θ_{rec}(t)) which corresponds to the fault signal (θ_{filt}(t)) is formed by means of the reference model (22).

4. Method according to Claim 3, **characterized in that** the reference model (22) corresponds to a physical modelling of the controlled system.

5. Method according to one of Claims 3 or 4, **characterized in that** the model-based feedback can be activated and deactivated.

6. Method according to Claim 5, **characterized in that** in a time interval which can be determined it is checked whether the fault signal (θ_{filt}(t)) which is present and the reconstructed fault signal (θ_{rec}(t)) correspond sufficiently in terms of their phase angle and/or amplitude, and if this is the case the model-based feedback is activated.

7. Method according to one of Claims 3 to 6, **characterized in that** it is checked whether the fault signal (θ_{filt}(t)) which is present and the reconstructed fault signal (θ_{rec}(t)) correspond sufficiently in terms of their phase angle and/or amplitude, and if this is not the case the reference model (28) is adapted until sufficient correspondence between the fault signal (θ_{filt}(t)) which is present and the reconstructed fault signal (θ_{rec}(t)) is achieved.

8. Method according to Claim 7, **characterized in that** an action chain is determined by connecting a torque during operation of the vehicle, and the adaptation is carried out as a function of the determined action chain.

9. Method according to one of Claims 3 to 8, **characterized in that** the reference model (22) comprises a model structure of a torque adjuster (7), wherein the model structure of the torque adjuster (7) is initially assumed to be an inert mass with unknown damping, wherein the damping is proportional to the speed of the torque adjuster (7).

10. Method according to Claim 9, **characterized in that** the damping is determined by means of an online parameter estimation, in particular of a Kalman filter, within a predefined value range.

11. Method according to one of the preceding claims, **characterized in that** a variable bandpass (25) is used as the filter, wherein an excitation frequency (f₀) is formed as a function of a vehicle speed (v(t)) and/or as a function of a variable which correlates to a wheel speed, and wherein at least one centre frequency or the cutoff frequencies of the variable bandpass (25) is/are selected as a function of the excitation frequency (f₀).

12. Method according to one of the preceding claims, **characterized in that** the fault signal (θ_{filt}(t)) is extracted by means of a specified transmission function, wherein the transmission function comprises the fault suppression to be achieved over all the frequencies.

13. Method according to one of the preceding claims, **characterized in that** a multiplicity of filters (20, 25) is used, by means of which filters (20, 25) different fault signals (θ_{filt}(t)) are determined from the rotor signal (θ(t)) and the determined fault signals (θ_{filt}(t)) are fed jointly to the combined fault and state calculator (21).

14. Device for compensating fault information in an electrical steering system (1), wherein the steering system (1) comprises an actuable torque adjuster (7), the torque adjuster (7) has a rotor (15), and the steering system (1) comprises a sensor (16) for detecting a rotor signal (θ(t)) which describes a current rotor position or a current rotor speed, **characterized in that** the device comprises a filter element (20) for extracting a fault signal (θ_{filt}(t)) from the detected rotor signal (θ(t)) and a combined fault and state calculator (21) for generating a compensation torque (M_{Comp}) as a function of the fault signal (θ_{filt}(t)).

15. Device according to Claim 14, **characterized in that** the device has means for carrying out a method according to one of Claims 1 to 13.

## Revendications

1. Procédé de compensation des informations perturbatrices dans un système de direction (1) électrique dans un véhicule, le système de direction (1) comprenant un actionneur à couple (7) commandable et l'actionneur à couple (7) présentant un rotor (15), **caractérisé en ce qu'**un signal de rotor (θ(t)) décrivant une position actuelle du rotor ou une vitesse actuelle du rotor est acquis, un signal perturbateur (θ_{filt}(t)) est extrait du signal de rotor (θ(t)) acquis, le signal perturbateur (θ_{filt}(t)) est acheminé à un calculateur de perturbation et d'état combiné (21) et un couple de compensation (M_{Komp}) est généré à l'aide du calculateur de perturbation et d'état combiné (21) en fonction du signal perturbateur (θ_{filt}(t)).

2. Procédé selon la revendication 1, **caractérisé en ce que** le signal perturbateur (θ_{filt}(t)) est extrait du signal de rotor (θ(t)) à l'aide d'un filtre (20), le filtre (20) étant notamment réalisé sous la forme d'un filtre passe-haut ou d'un filtre passe-bande.

3. Procédé selon l'une des revendications précédentes, **caractérisé en ce qu'**une rétroaction basée sur un modèle est prévue de telle sorte que le couple de compensation (M_{Komp}) est acheminé à un modèle de référence (22) et un signal perturbateur reconstruit (θᵣₑₖ(t)) correspondant au signal perturbateur (θ_{filt}(t)) est formé à l'aide du modèle de référence (22).

4. Procédé selon la revendication 3, **caractérisé en ce que** le modèle de référence (22) correspond à une modélisation physique de la branche de régulation.

5. Procédé selon l'une des revendications 3 ou 4, **caractérisé en ce que** la rétroaction basée sur un modèle peut être activée et désactivée.

6. Procédé selon la revendication 5, **caractérisé en ce qu'**un contrôle est effectué dans un intervalle de temps pouvant être défini pour vérifier si le signal perturbateur (θ_{filt}(t)) appliqué et le signal perturbateur reconstruit (θᵣₑₖ(t)) concordent suffisamment du point de vue de leur phase et/ou de leur amplitude et, si c'est le cas, la rétroaction basée sur un modèle est engagée.

7. Procédé selon l'une des revendications 3 à 6, **caractérisé en ce qu'**un contrôle est effectué pour vérifier si le signal perturbateur (θ_{filt}(t)) appliqué et le signal perturbateur reconstruit (θᵣₑₖ(t)) concordent suffisamment du point de vue de leur phase et/ou de leur amplitude et, si ce n'est pas le cas, une adaptation du modèle de référence (28) est effectuée jusqu'à ce qu'une concordance suffisante du signal perturbateur (θ_{filt}(t)) appliqué et du signal perturbateur reconstruit (θᵣₑₖ(t)) soit atteinte.

8. Procédé selon la revendication 7, **caractérisé en ce qu'**une chaîne d'action est déterminée par application d'un couple pendant le fonctionnement du véhicule et l'adaptation est effectuée en fonction de la chaîne d'action déterminée.

9. Procédé selon l'une des revendications 3 à 8, **caractérisé en ce que** le modèle de référence (22) comprend une structure de modèle d'un actionneur à couple (7), la structure de modèle de l'actionneur à couple (7) étant supposée initialement être une masse inerte ayant une atténuation inconnue, l'atténuation étant proportionnelle à la vitesse de l'actionneur à couple (7).

10. Procédé selon la revendication 9, **caractérisé en ce que** l'atténuation est déterminée au sein d'une plage de valeurs prédéfinie à l'aide d'une estimation en ligne des paramètres, notamment d'un filtre de Kalman.

11. Procédé selon l'une des revendications précédentes, **caractérisé en ce que** le filtre utilisé est un filtre passe-bande variable (25), une fréquence d'excitation (f₀) étant formée en fonction d'une vitesse du véhicule (v(t)) et/ou en fonction d'une grandeur corrélée avec une vitesse de rotation de roue et au moins une fréquence centrale ou les fréquences de coupure du filtre passe-bande variable (25) est/sont sélectionnée(s) en fonction de la fréquence d'excitation (f₀).

12. Procédé selon l'une des revendications précédentes, **caractérisé en ce que** l'extraction du signal perturbateur (θ_{filt}(t)) est réalisée à l'aide d'une fonction de transmission spécifique, la fonction de transmission comprenant l'inhibition des perturbations à atteindre sur toutes les fréquences.

13. Procédé selon l'une des revendications précédentes, **caractérisé en ce qu'**une pluralité de filtres (20, 25) sont utilisés, à l'aide desquels sont déterminés différents signaux perturbateurs (θ_{filt}(t)) à partir du signal de rotor (θ(t)) et les signaux perturbateurs (θ_{filt}(t)) déterminés sont acheminés en commun au calculateur de perturbation et d'état combiné (21).

14. Dispositif de compensation des informations perturbatrices dans un système de direction (1) électrique, le système de direction (1) comprenant un actionneur à couple (7) commandable, l'actionneur à couple (7) présentant un rotor (15) et le système de direction (1) comprenant un capteur (16) pour acquérir un signal de rotor (θ(t)) décrivant une position actuelle du rotor ou une vitesse actuelle du rotor, **caractérisé en ce que** le dispositif comprend un élément filtrant (20) destiné à extraire un signal perturbateur (θ_{filt}(t)) du signal de rotor (θ(t)) acquis et un calculateur de perturbation et d'état combiné (21) destiné à générer un couple de compensation (M_{Komp}) en fonction du signal perturbateur (θ_{filt}(t)).

15. Dispositif selon la revendication 14, **caractérisé en ce que** le dispositif présente des moyens pour mettre en oeuvre un procédé selon l'une des revendications 1 à 13.
